# EUROPÄISCHE PATENTANMELDUNG

(11) **EP 1 832 713 A1**
(43) Veröffentlichungstag der Anmeldung: **12.09.2007**
(21) Anmeldenummer: 06004536.6
(22) Anmeldetag: 06.03.2006
(51) Int. Cl.: F01D 5/18, F02C 7/18

(54) **Gasturbine**

(71) Anmelder: SIEMENS AKTIENGESELLSCHAFT, 80333 München (DE)
(72) Erfinder: Ehehalt, Ulrich, 45131 Essen (DE); Fajardo-Reina, Scarlett, 40231 Düsseldorf (DE); Grundei, Daniel, 47226 Duisburg (DE); Harders, Harald, 45468 Mülheim a.d. Ruhr (DE); Krause, Stefan, 45470 Mülheim an der Ruhr (DE); Krompietz, Martin, 45359 Essen (DE); Lüttenberg, Andreas, 45289 Essen (DE); Pels Leusden, Christoph, Dr., 90419 Nürnberg (DE); Scheidtmann, Wilhelm, 58644 Iserlohn (DE); Schumann, Eckart, Dr., 45468 Mülheim a.d. Ruhr (DE); Tenrahm, Thomas-Dieter, 46535 Dinslaken (DE); Trenaman, Dirk, 47506 Neukirchen-Vluyn (DE)

(57) **Zusammenfassung**

Eine Energiewandlungsmaschine (1), deren Luftverdichter (2) und/oder eine diesen antreibende Turbineneinheit (6) jeweils mit einer Anzahl von mit Kühlluft beaufschlagbaren Schaufeln bestückt ist, soll bei besonders hoher betrieblicher Sicherheit besonders wirtschaftlich betrieben werden können. Dazu ist erfindungsgemäß in ein den Schaufeln zugeordnetes Kühlluftsystem (10) eine Messstation (18) zur Ermittlung der Partikelbeladung des Kühlluftstroms geschaltet.

## Beschreibung

Die Erfindung bezieht sich auf eine Energiewandlungsmaschine mit Fluiden, insbesondere auf eine Gasturbinenanlage, mit einer Turbineneinheit, die mit einer Anzahl von mit Kühlluft beaufschlagbaren Schaufeln bestückt ist. Sie betrifft weiter ein Verfahren zum Betreiben einer derartigen Anlage.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu von Brennern in den ihnen nachgeschalteten Brennkammern verbrannt, wobei von einem Luftverdichter verdichtete Luft zugeführt wird. Durch die Verbrennung des Brennstoffs wird ein unter hohem Druck stehendes Arbeitsmedium mit einer hohen Temperatur erzeugt. Dieses Arbeitsmedium wird in eine den Brennkammern nachgeschaltete Turbineneinheit geführt, wo es sich arbeitsleistend entspannt. Die in der Turbineneinheit erzeugte Leistung dient zum Antrieb des Generators oder der Arbeitsmaschine und des Luftverdichters, wobei als so genannte Nutzleistung die Leistung des Generators oder der Arbeitsmaschine zur Verfügung steht.

Zur Erzeugung der Rotationsbewegung der Turbinenwelle sind an dieser eine Anzahl von üblicherweise in Schaufelgruppen oder Schaufelreihen zusammengefassten Laufschaufeln angeordnet, die über einen Impulsübertrag aus dem Arbeitsmedium die Turbinenwelle antreiben. Zur Führung des Arbeitsmediums in der Turbineneinheit sind zudem üblicherweise zwischen benachbarten Laufschaufelreihen mit dem Turbinengehäuse verbundene Leitschaufelreihen angeordnet. Analog umfasst auch der Luftverdichter zu Laufschaufelreihen zusammengefasste Laufschaufeln und zwischen den Laufschaufelreihen angeordnete Leitschaufeln, wobei in diesem Fall die Laufschaufeln zur für den Betrieb der Gasturbinenanlage erforderlichen Verdichtung der Verbrennungsluft ausgelegt sind.

Bei der Auslegung derartiger Gasturbinen ist zusätzlich zur erreichbaren Leistung üblicherweise ein besonders hoher Wirkungsgrad ein Auslegungsziel. Eine Erhöhung des Wirkungsgrades lässt sich aus thermodynamischen Gründen grundsätzlich durch eine Erhöhung der Austrittstemperatur erreichen, mit dem das Arbeitsmedium aus der Brennkammer ab- und in die Turbineneinheit einströmt. Daher werden Temperaturen von etwa 1200 °C bis 1300 °C für derartige Gasturbinen angestrebt und auch erreicht.

Bei derartig hohen Temperaturen des Arbeitsmediums sind jedoch die diesem ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Kühlung der betroffenen Komponenten, insbesondere von Lauf- und/oder Leitschaufeln, der Turbineneinheit vorgesehen. Die Schaufeln in der Turbineneinheit sind daher üblicherweise kühlbar ausgebildet, wobei insbesondere eine wirksame und zuverlässige Kühlung der in Strömungsrichtung des Arbeitsmediums gesehen ersten Schaufelreihen in der Turbineneinheit sichergestellt sein soll. Zur Kühlung weist die jeweilige Turbinenschaufel daher einen in das Schaufelrad oder das Schaufelprofil integrierten Kühlmittelkanal auf, von dem aus ein Kühlmittel gezielt, insbesondere den thermisch belasteten Zonen der jeweiligen Schaufel, zuleitbar ist.

Als Kühlmittel kommt üblicherweise Kühlluft zum Einsatz. Diese kann der jeweiligen Turbinenschaufel beispielsweise über einen integrierten Kühlmittelkanal zugeführt werden. Nach dem Austritt aus der Turbinenschaufel wird die Kühlluft in der Art einer offenen Kühlung mit dem in der Turbineneinheit geführten Arbeitsmedium vermischt. Zur Zuführung der Kühlluft ist den Schaufeln der Turbineneinheit einer derartigen Gasturbinenanlage üblicherweise ein Kühlluftzuführsystem zugeordnet, dem eingangsseitig aus dem Luftverdichter entnommene Kühlluft als Kühlmedium zuführbar ist.

Zur Gewährleistung einer ausreichend hohen betrieblichen Sicherheit bei dem Betrieb einer derartigen Gasturbinenanlage ist eine hohe Zuverlässigkeit des jeweiligen Kühlsystems unabdingbar. Wie sich jedoch herausgestellt hat, können insbesondere im Hinblick auf die aufgrund der gegebenen Randbedingungen vergleichsweise klein bemessenen freien Strömungsquerschnitte in den Kühlmittelkanälen in den jeweiligen Schaufeln durch in der Kühlluft mitgeführte Partikel oder Verschmutzungen eine Verschmutzung der Kühlmittelkanäle in den Schaufeln und möglicherweise auch eine Verstopfung derartiger Kanäle auftreten. Obwohl die Kühlluft üblicherweise vor Eintritt in den Luftverdichter und dem diesen nachgeordneten Kühlluftsystem bereits gefiltert und somit weitgehend frei von mitgeführten Verunreinigungen gehalten wird, können durch mitgeführte Restverunreinigungen hervorgerufene Blockaden oder Verstopfungen einzelner Kühlmittelkanäle zu lokalen thermischen Überbelastungen einzelner Schaufelzonen und damit zu unerwünschten Beschädigungen einzelner Komponenten führen.

Um derartige Schäden zu vermeiden, werden die thermisch belasteten Komponenten, insbesondere die Schaufeln in der Turbineneinheit, regelmäßigen Inspektionen unterworfen, bei denen unter anderem Verschmutzungen der Kühlluftkanäle erkannt und behoben werden können. Derartige Inspektionen sind jedoch mit einem Stillstand der gesamten Anlage verbunden, was zu unerwünschten Ausfallzeiten und damit zu wirtschaftlichen Einbußen beim Betrieb der Anlagen führt. Des Weiteren müssen, um die gewünschte betriebliche Sicherheit einhalten zu können, die Intervalle und Zeiträume für derartige Inspektionen derart kurz- oder frühzeitig gewählt werden, dass sich ansammelnde Verschmutzungen mit ausreichender Sicherheit nicht zu Blockaden oder Verstopfungen einzelner Kühlmittelkanäle führen. Die wirtschaftlich an sich unerwünschten Anlagenstillstände müssen daher üblicherweise aus Sicherheitsgründen zu einem noch höheren Maße in Kauf genommen werden, als durch den tatsächlichen Verschmutzungsgrad der jeweiligen Schaufeln eigentlich erforderlich ist.

Der Erfindung liegt daher die Aufgabe zugrunde, eine Energiewandlungsmaschine der vorgenannten Art anzugeben, die bei besonders hoher betrieblicher Sicherheit besonders wirtschaftlich betrieben werden kann. Des Weiteren soll ein geeignetes Verfahren zum Betreiben einer derartigen Anlage angegeben werden.

Bezüglich der Energiewandlungsmaschine, insbesondere der Gasturbinenanlage wird diese Aufgabe erfindungsgemäß gelöst, indem in ein den Schaufeln zugeordnetes Kühlluftzuführsystem eine Messstation zur Ermittlung der Partikelbeladung des Kühlluftstroms geschaltet ist.

Die Erfindung geht von der Überlegung aus, dass zur Gewährleistung einer hohen betrieblichen Sicherheit der Turbinenanlage eine mögliche Beeinträchtigung der Kühlwirkung an den Turbinenschaufeln infolge von Verstopfungen der Kühlmittelkanäle in jedem Falle berücksichtigt werden sollte. Um dies aber gewährleisten zu können, ohne in der Art vorher geplanter oder regelmäßiger Inspektionen vollständige Anlagenstillstände in Kauf nehmen zu müssen, sollte stattdessen in geeigneter Weise ein für den Verschmutzungsgrad der Schaufeln Parameter bereits während des Betriebs der Gasturbinenanlage geeignet überwacht werden. Als hierfür besonders geeignet angesehen wird ein Parameter, der ursächlich mit den möglicherweise zur Verstopfung der Kühlmittelkanäle führenden Verschmutzungen in Zusammenhang steht. Da derartige Verschmutzungen durch im Kühlluftstrom mitgeführte Partikel oder Verunreinigungen hervorgerufen werden können, ist vorgesehen, als hierfür besonders geeigneten Parameter die Partikelbeladung des Kühlluftstroms, also beispielsweise einen Kennwert für Anzahl, Dichte, Volumen- oder Gewichtsanteil der im Kühlluftstrom mitgeführten Fremd- oder Verschmutzungspartikel, zu ermitteln. Dazu ist in das Kühlluftzufuhrsystem an geeigneter Stelle, also insbesondere außerhalb der eigentlichen Turbineneinheit, eine Messstation zur Ermittlung der Partikelbeladung des Kühlluftstroms geschaltet.

Der Kühlluftstrom kann dabei aus dem Verdichter gehäuseseitig und/oder auch rotorseitig, d.h. über den Rotor geführt, entnehmbar sein. Die Partikelbeladung kann dabei für beide Teilströme der Kühlluft messbar sein. Vorteilhafterweise ist ein Filter in externer Bauweise, auch bezeichnet als externer Filter, zur Messung der Partikelbeladung vorgesehen.

Die Messstation kann dabei nach unterschiedlichen physikalischen Messprinzipien geeignet zur Ermittlung eines Kennwerts für die Partikelbeladung im Kühlluftstrom ausgelegt sein. Insbesondere sind beispielsweise optische oder gravimetrische Messprinzipien oder auch Kondensationsmesszähler ("CPC"), dynamische Differential-Mobilitätsspektrometrie ("DMS") oder elektrische Niederdruckimpaktoren ("ELPI") denkbar.

Um von der ermittelten Partikelbeladung geeignete Rückschlüsse auf den Verschmutzungsgrad einzelner Schaufeln und somit auf den unmittelbaren Handlungsbedarf bei der Reinigung oder Wartung von Turbinenteilen ziehen zu können, ist die Messstation vorteilhafterweise datenseitig mit einer Auswerteeinheit verbunden. In der Auswerteeinheit sind zweckmäßigerweise anlagenrelevante Erfahrungswerte oder Betriebserfahrungen hinterlegt und dokumentiert, mit denen zumindest näherungsweise quantitativ ein Zusammenhang mit lokal auftretenden Verschmutzungen an einzelnen Schaufeln und den festgestellten Partikel- oder Verunreinigungsbeladungen des Kühlluftstroms hergestellt werden kann. In der Auswerteeinheit ist somit vorteilhafterweise unter Rückgriff auf hinterlegte Erfahrungswerte anhand der ermittelten Partikelbeladung ein für den Verschmutzungsgrad einer Turbinenschaufel charakteristischer Kennwert erzeugbar, der anschließend für eine weitere Auswertung oder auch zur Einleitung eventuell notwendiger Maßnahmen, wie beispielsweise Wartungseingriffe oder dergleichen, herangezogen werden kann.

Um die ermittelten Partikelbeladungen auch für spätere Diagnosen oder sonstige Auswertungen berücksichtigen zu können, ist der Auswerteeinheit in weiterer zweckmäßiger Ausgestaltung ein Speichermodul zugeordnet, in dem die ermittelten Partikelbeladungen oder die diese jeweils repräsentierenden Messwerte vorteilhafterweise gemeinsam mit einem jeweils zugeordneten Zeitwert hinterlegbar sind, so dass anhand der hinterlegten Daten und Datenkombinationen ein Verlaufsprotokoll bezüglich der im Kühlmittelstrom mitgeführten Verunreinigungen oder Partikel erstellt werden kann.

Vorteilhafterweise ist die Gasturbinenanlage und das dieser zugeordnete Auswertesystem für eine kontinuierliche Überwachung oder Erfassung von für die Partikelbeladung des Kühlluftstroms charakteristischen Messwerten ausgelegt. Damit ist einerseits bei Hinterlegung der gewonnenen Messwerte in der Art eines kontinuierlichen Verlaufsprotokolls die in der Vergangenheit erfolgte zeitliche Entwicklung bei der Verunreinigung der Kühlluft und daraus abgeleitet auch der Verschmutzung der jeweiligen Schaufeln rekonstruierbar. In weiterer vorteilhafter Ausgestaltung ist die Messstation aber auch datenseitig mit einer Anzeigeeinheit verbunden, über die ein zeitlicher Verlauf der ermittelten Partikelbeladung graphisch darstellbar ist. Dabei kann insbesondere ein zeitlicher Verlauf der ermittelten Partikelbeladung oder des für den Verschmutzungsgrad charakteristischen Kennwerts als Trend graphisch dargestellt werden. Durch die Beobachtung derartiger Trends ist bereits frühzeitig ein Rückschluss auf sich eventuell anbahnende unerwünschte Verschmutzungen an einzelnen Schaufeln erkennbar, so dass besonders bedarfsgerecht und frühzeitig entsprechende Maßnahmen eingeleitet werden können. Gerade durch die Auswertung derartiger Trends ist somit in der Art einer Frühwarnung eine besonders zielgerichtete Einleitung erforderlicher Wartungsmaßnahmen möglich.

Üblicherweise wird die Kühlluft den einzelnen Komponenten zunächst über einen Haupt-Kühlluftstrom zugeführt, der geeignet in einzelne Zweigströme aufgeteilt und bedarfsgerecht den einzelnen Komponenten zugeführt wird. Die Messung der Partikelbeladung kann im Haupt-Kühlluftstrom vorgenommen werden. In besonders vorteilhafter Ausgestaltung ist aber vorgesehen, vom Haupt-Kühlluftstrom zunächst einen Teilstrom geeignet abzuzweigen, wobei die Messung der Partikelbeladung dann in diesem Teilstrom vorgenommen wird. Dazu ist vorteilhafterweise die Messstation in eine von einer Haupt-Kühlluftleitung abzweigende Zweigleitung geschaltet. Hinsichtlich der Anordnung und Dimensionierung der Zweigleitung ist dabei in besonders vorteilhafter Weise berücksichtigt, dass der in der Zweigleitung geführte Teilstrom des Kühlluftstroms hinsichtlich seiner relevanten Eigenschaften, also insbesondere hinsichtlich seiner Partikel- oder Verschmutzungsbeladung, repräsentativ für den Kühlluftstrom insgesamt sein sollte. Insbesondere bei einer derartigen Ermittlung der Partikelbeladung in einem Teilstrom des Kühlluftstroms kann die Messung der Partikelbeladung während der laufenden Anlage erfolgen, so dass Anlagenstillstandszeiten besonders wirkungsvoll verringert sind.

Vorteilhafterweise ist der Messstation ein Partikelfilter zugeordnet. Durch diesen Partikelfilter sollte gewährleistet werden, dass in der Kühlluft nur ein besonders geringes Maß an Partikeln oder Verunreinigungen mitgeführt wird, so dass die Verschmutzungsneigung an den einzelnen Schaufeln besonders gering gehalten ist. Der Partikelfilter kann dabei mit der Messstation in einen gemeinsamen Kühlluftstrang geschaltet oder auch in der Art einer integrierten Bauweise mit der Messstation in einem gemeinsamen Gehäuse angeordnet sein.

Bezüglich des Verfahrens zum Betreiben einer Gasturbinenanlagewird die genannte Aufgabe gelöst, indem einer Anzahl von Turbinenschaufeln der Gasturbinenanlage Kühlluft zugeführt wird, wobei die Partikelbeladung der zugeführten Kühlluft gemessen wird.

Vorteilhafterweise wird anhand der dabei gemessenen Partikelbeladung ein für den Verschmutzungsgrad einer Turbinenschaufel charakteristischer Kennwert ermittelt. Dabei wird vorteilhafterweise ein zeitlicher Verlauf der ermittelten Partikelbeladung abgespeichert.

Weiterhin wird vorteilhafterweise ein zeitlicher Verlauf der ermittelten Partikelbeladung oder des für den Verschmutzungsgrad charakteristischen Kennwerts als Trend graphisch dargestellt. In besonders vorteilhafter Weiterbildung wird die Partikelbeladung in einem von einem Haupt-Kühlluftstrom abgezweigten Teilstrom gemessen.

Die mit der Erfindung erzielten Vorteile bestehen insbesondere darin, dass durch die Ermittlung der Partikelbeladung des Kühlluftstroms in der Art einer Online-Erfassung oder -Überwachung während des Betriebs der Gasturbinenanlage geeignete Rückschlüsse auf sich anbahnende Verschmutzungen oder Verstopfungen einzelner Kühlmittelkanäle im Bereich der Turbinenschaufeln gezogen werden können. Damit können einzuleitende Gegenmaßnahmen, wie beispielsweise Wartungs- oder Reparaturarbeiten, einerseits frühzeitig und rechtzeitig vor dem Auftreten von Beschädigungen von Anlagenkomponenten, andererseits aber auch besonders bedarfsgerecht und beschränkt auf tatsächlich notwendige Eingriffe geplant und vorgenommen werden. Unnötige Anlagenstillstandszeiten, die insbesondere bei regelmäßigen oder nach strikten Zeitmustern vorgenommenen Inspektionen in Kauf genommen werden müssen, können damit vermieden werden, so dass insgesamt eine besonders wirtschaftliche Betriebsweise der Gasturbinenanlage erreichbar ist.

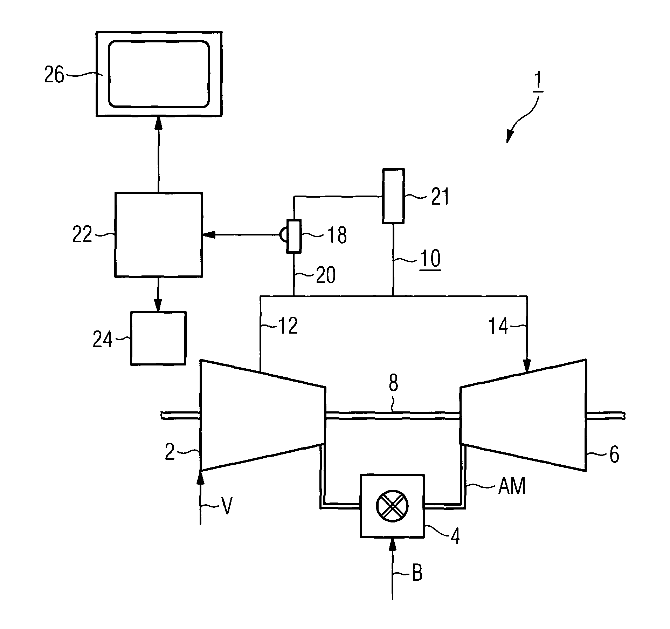

Ein Ausführungsbeispiel der Erfindung wird anhand einer Zeichnung näher erläutert. Darin zeigt die Figur schematisch eine Energiewandlungsmaschine.

Die Energiewandlungsmaschine 1 gemäß der Figur ist als Gasturbine ausgeführt und weist einen Luftverdichter 2 für Verbrennungsluft V, eine Brennkammer 4 sowie eine Turbineneinheit 6 auf. Vom Luftverdichter 2 abströmende verdichtete Verbrennungsluft V ist gemeinsam mit Brennstoff B der Brennkammer 4 zuführbar. Von der Brennkammer 4 gelangt das durch die Verbrennung erzeugte Arbeitsmedium AM in die Turbineneinheit 6, wo es sich arbeitsleistend entspannt. Es könnte aber auch eine alternative Ausführung der Energiewandlungsmaschine 1, insbesondere als Dampfturbine, vorgesehen sein.

Die Turbineneinheit 6 und der Luftverdichter 2 sind auf einer gemeinsamen, auch als Turbinenläufer bezeichneten Turbinenwelle 8 angeordnet. Mit der Turbinenwelle 8 ist auch ein nicht näher dargestellter Generator oder eine nicht näher dargestellte Arbeitsmaschine verbunden, so dass die Turbineneinheit 6 sowohl den Luftverdichter 2 als auch den Generator bzw. die Arbeitsmaschine antreibt.

Die Turbineneinheit 6 weist eine Anzahl von mit der Turbinenwelle 8 verbundenen, rotierbaren, einzeln nicht näher dargestellten Laufschaufeln auf. Die Laufschaufeln sind kranzförmig an der Turbinenwelle 8 angeordnet und bilden somit eine Anzahl von Laufschaufelreihen. Weiterhin umfasst die Turbineneinheit 6 eine Anzahl von feststehenden Leitschaufeln, die ebenfalls kranzförmig unter Bildung von Leitschaufelreihen an einem Innengehäuse der Turbineneinheit 6 befestigt sind. Die Laufschaufeln dienen zum Antrieb der Turbinenwelle 8 durch Impulsübertrag vom die Turbineneinheit 6 durchströmenden Arbeitsmedium AM. Die Leitschaufeln dienen hingegen zur Strömungsführung des Arbeitsmediums AM zwischen jeweils zwei in Strömungsrichtung des Arbeitsmediums AM gesehen aufeinander folgenden Laufschaufelreihen oder Laufschaufelkränzen. Ein aufeinander folgendes Paar aus einem Kranz von Leitschaufeln oder einer Leitschaufelreihe und aus einem Kranz von Laufschaufelreihe wird auch als Turbinenstufe bezeichnet.

In gleicher Weise ist der Luftverdichter 2 mit mit der Turbinenwelle 8 verbundenen Laufschaufeln sowie mit feststehend angeordneten Leitschaufeln bestückt, wobei hier die Laufschaufeln zur zunehmenden Verdichtung der Verbrennungsluft V während der Durchströmung durch den Luftverdichter 2 dienen.

Zur Erzielung eines vergleichsweise hohen Wirkungsgrades und zur Gewährleistung einer hohen Betriebssicherheit beim Betrieb der Energiewandlungsmaschine 1 sind zumindest einige der Turbinenschaufeln kühlbar ausgelegt, wobei aus dem Luftverdichter 2 entnommene Kühlluft als Kühlmedium vorgesehen ist. Den Schaufeln ist ein Kühlluftsystem 10 zugeordnet, welches in der Figur lediglich schematisch dargestellt ist. Das Kühlluftsystem 10 umfasst eine an den Luftverdichter 2 angeschlossene Entnahmeleitung 12, die vor Eintritt in die Turbineneinheit 6 in eine Kühlluftleitung 14 übergeht. Die Kühlluftleitung 14 ist derart verlegt und an die jeweiligen Komponenten angeschlossen, dass bedarfsgerecht ein geeignet bemessener Zustrom an Kühlluft an die jeweils zu kühlenden Bauteile, insbesondere Schaufeln im Bereich der Turbineneinheit 6, heranführbar ist.

Insbesondere im Hinblick auf die vergleichsweise gering dimensionierten freien Querschnitte in den jeweiligen in die einzelnen Schaufeln integrierten Kühlmittelkanälen können im Kühlluft-Zustrom mitgeführte Verunreinigungen zu Ablagerungen oder Verschmutzungen der jeweiligen Schaufeln führen. Derartige Verschmutzungen oder Ablagerungen können zur Blockade der jeweiligen Kühlmittelkanäle oder zu deren Verstopfung führen, so dass die erreichbare Kühlleistung signifikant beeinträchtigt sein könnte. Beispielsweise könnte sich eine der in einem Prallkühlblech vorgesehenen Prallkühlöffnungen einer mit einer Prallkühlung versehenen Turbinenschaufel aufgrund der in der Kühlluft mitgeführten Partikel bei fortschreitender Betriebsdauer kontinuierlich zusetzen, was die Kühlwirkung der Kühlluft an dieser Stelle lokal beeinträchtigt.

Trotz einer deswegen möglicherweise vor dem verdichter 2 vorgesehenen Partikelfilterung kann nicht vollständig ausgeschlossen werden, dass die den Komponenten der Energiewandlungsmaschine 1 zuströmende Kühlluft noch weitere Partikel oder Reste von Verunreinigungen mit sich führt. Die Energiewandlungsmaschine 1 ist nunmehr darauf ausgelegt, selbst bei derartig mitgeführten Verunreinigungen eine vergleichsweise hohe betriebliche Sicherheit unter Vermeidung unnötiger oder unerwünscht langer Anlagenstillstandszeiten zu gewährleisten. Dazu ist die Energiewandlungsmaschine 1 für eine Online-Erfassung oder -Überwachung der in der Kühlluft mitgeführten Partikel oder Verunreinigungen bereits vor deren Eintritt in die zu kühlenden Anlagenkomponenten ausgelegt.

Um dies zu ermöglichen, ist in das den Schaufeln der Turbineneinheit 6 zugeordnete Kühlluftzuführsystem 10 eine Messstation 18 zur Ermittlung der Partikelbeladung des Kühlluftstroms geschaltet. Die Messstation 18 könnte in die Haupt-Kühlluftleitung 14 geschaltet sein. Um aber einen möglichst ungestörten Anlagenbetrieb selbst bei einer Online-Erfassung oder -Überwachung der Partikelbeladung des Kühlluftstroms in besonders weitgehendem Maße sicherstellen zu können, ist bei der Energiewandlungsmaschine 1 vorgesehen, die Partikelbeladung des Kühlluftstrom in einem vom Haupt-Kühlluftstrom abgezweigten Teilstrom außerhalb der Energiewandlungsmaschine 1 zu messen. Dazu umfasst das Kühlluftzuführsystem 10 eine von der Haupt-Kühlluftleitung 14 abzweigende Zweigleitung 20, in die die Messstation 18 geschaltet ist. Die Zweigleitung 20 ist hinsichtlich ihrer Anordnung, Verschaltung und Dimensionierung derart bemessen, dass der in ihr geführte Teilstrom der Kühlluft repräsentativ für den Hauptstrom der Kühlluft insbesondere im Hinblick auf die anteilige Beladung mit Partikeln oder Verunreinigungen ausgewertet werden kann. Weiterhin ist in die Zweigleitung 20 ein Partikelfilter 21 geschaltet.

Über die Messstation 18 ist die Partikelbeladung des aus dem Partikelfilter 16 abströmenden Kühlluftstroms ermittelbar. Die Messstation 18 kann nach einem hierfür geeigneten physikalischen Messprinzip aufgebaut sein. Im Ausführungsbeispiel ist dazu als Messprinzip ein optisches Messprinzip denkbar; es könnten aber auch andere geeignete Messprinzipien, wie beispielsweise ein gravimetrisches oder gleichwertiges Messprinzip vorgesehen sein.

Um aus den solchermaßen gewonnenen Messwerten für die Partikelbeladung des Kühlluftstroms geeignete Aussagen über den Anlagenzustand oder notwendige Wartungs- oder Reparaturmaßnahmen ableiten zu können, ist eine weitere Auswertung der in der Messstation 18 gewonnenen Daten vorgesehen. Dazu ist die Messstation 18 datenseitig mit einer Auswerteeinheit 22 verbunden. Die Auswerteeinheit 22 ist insbesondere dafür ausgelegt, aus den ermittelten Messwerten für die Partikelbeladung des Kühlluftstroms geeignete Aussagen über die aktuellen Verschmutzungsgrad einzelner Schaufeln in der Turbineneinheit 6 zu gewinnen. Dabei ist insbesondere der Rückgriff auf Erfahrungswerte oder anlagenrelevantes Betriebswissen vorgesehen, wobei diesbezügliche Daten und/oder Kennfelder in der Auswerteeinheit 2 hinterlegt sind. Über die Auswerteeinheit 22 ist somit ein für den Verschmutzungsgrad einer Verdichter- oder Turbinenschaufel charakteristischer Kennwert erzeugbar.

Um die gewonnenen Erkenntnisse auch für spätere Diagnose- oder Analysezwecke bereithalten zu können, ist die Auswerteeinheit 22 mit einem Speichermodul 24 verbunden. Das Speichermodul 24 ist insbesondere dafür ausgelegt, dass die ermittelten Partikelbeladungen oder die daraus gewonnenen, für den Verschmutzungsgrad der Schaufeln charakteristischen Kennwerte gegebenenfalls unter Berücksichtigung aktueller Zeitparameter in der Art eines Verlaufsprotokolls hinterlegbar sind.

Um die betriebliche Auswertung der gewonnenen Daten insbesondere in der Art einer Früherkennung oder Frühwarnung besonders wirksam zur bedarfsgerechten Steuerung und/oder Veranlassung von Wartungs- oder Reparaturarbeiten nutzen zu können, ist zudem eine Darstellung der erfassten, für die Verschmutzung einzelner Schaufeln charakteristischen Kennwerte und/oder der ermittelten Messwerte für die Partikelbeladung in Form eines Trends vorgesehen. Dazu ist die Auswerteeinheit 22 mit einer Anzeigeeinheit 26, insbesondere einem Bildschirm oder einem Display, verbunden. Auf der Anzeigeeinheit 26 ist ein zeitlicher Verlauf der ermittelten Partikelbeladung und/oder der ermittelten Kennwerte für den Verschmutzungsgrad graphisch darstellbar, so dass für das Bedienpersonal bereits anhand der graphischen Wiedergabe des zeitlichen Verlaufs dieser Messwerte eine Prognose für das weitere Anlagenverhalten oder für die zukünftige Entwicklung der jeweiligen Verschmutzung ablesbar ist.

Beim Betrieb der Energiewandlungsmaschine 1 wird in der Art einer Online-Erfassung oder -Überwachung in dem durch die Zweigleitung 20 strömenden Teilstrom der Kühlluft kontinuierlich die Partikelbeladung des Kühlluftstroms ermittelt. Aus den dabei gewonnenen Messwerten werden aktuelle Erkenntnisse über den jeweiligen Verschmutzungsgrad einzelner Schaufeln in der Turbineneinheit 6 gewonnen. Anhand der daraus gewonnenen Erkenntnisse wird anhand aktueller Betriebsbedingungen auf die notwendige Reparatur- oder Wartungsarbeiten geschlossen, so dass entsprechende Reinigungsmaßnahmen oder dergleichen an einzelnen Turbinenschaufeln besonders bedarfsgerecht und dennoch unter Einhaltung besonders hoher Sicherheitsstandards ermöglicht sind.

## Patentansprüche

1. Energiewandlungsmaschine (1),
mit einer Turbineneinheit (6),
die mit einer Anzahl von mit Kühlluft beaufschlagbaren Schaufeln bestückt ist,
wobei in ein den Schaufeln zugeordnetes Kühlluftsystem (10) eine Messstation (18) zur Ermittlung der Partikelbeladung des Kühlluftstroms geschaltet ist.

2. Energiewandlungsmaschine (1) nach Anspruch 1,
deren Messstation (18) datenseitig mit einer Auswerteeinheit (22) verbunden ist,
in der unter Rückgriff auf hinterlegte Erfahrungswerte anhand der ermittelten Partikelbeladung ein für den Verschmutzungsgrad einer Turbinenschaufel charakteristischer Kennwert erzeugbar ist.

3. Energiewandlungsmaschine (1) nach Anspruch 2,
deren Auswerteeinheit (22) ein Speichermodul (24) umfasst, in dem in der Art eines Verlaufsprotokolls die ermittelten Partikelbeladungen hinterlegbar sind.

4. Energiewandlungsmaschine (1) nach einem der Ansprüche 1 bis 3,
deren Messstation (18) datenseitig mit einer Anzeigeeinheit (26) verbunden ist,
über die ein zeitlicher Verlauf der ermittelten Partikelbeladung graphisch darstellbar ist.

5. Energiewandlungsmaschine (1) nach einem der Ansprüche 1 bis 4,
deren Kühlluftsystem (10) eine Kühlluftleitung (14) umfasst,
von der eine Zweigleitung (20) abzweigt,
wobei die Messstation (18) in die Zweigleitung (20) geschaltet ist.

6. Energiewandlungsmaschine (1) nach einem der Ansprüche 1 bis 5,
deren Messstation (18) ein Partikelfilter (16) zugeordnet ist.

7. Verfahren zum Betreiben einer Energiewandlungsmaschine (1),
insbesondere nach einem der Ansprüche 1 bis 6,
bei dem einer Anzahl von Turbinenschaufeln Kühlluft zugeführt wird,
wobei die Partikelbeladung der zugeführten Kühlluft gemessen wird.

8. Verfahren nach Anspruch 7,
bei dem anhand der gemessenen Partikelbeladung ein für den Verschmutzungsgrad einer Turbinenschaufel charakteristischer Kennwert ermittelt wird.

9. Verfahren nach Anspruch 7 oder 8,
bei dem ein zeitlicher Verlauf der ermittelten Partikelbeladung abgespeichert wird.

10. Verfahren nach einem der Ansprüche 7 bis 9,
bei dem ein zeitlicher Verlauf der ermittelten Partikelbeladung oder des für den Verschmutzungsgrad charakteristischen Kennwerts als Trend graphisch dargestellt wird.

11. Verfahren nach einem der Ansprüche 7 bis 10,
bei dem die Partikelbeladung in einem von einem Haupt-Kühlluftstrom abgezweigten Teilstrom gemessen wird.
